# EUROPÄISCHE PATENTSCHRIFT

(11) **EP 0 969 304 B1**
(45) Veröffentlichungstag und Bekanntmachung des Hinweises auf die Patenterteilung: **28.04.2004**
(21) Anmeldenummer: 99111477.8
(22) Anmeldetag: 12.06.1999
(51) Int. Cl.: G02B 21/08

(54) **Vorsatzoptik**
Optical adapter
Adapteur optique

(30) Priorität: 02.07.1998 AT 115498
(43) Veröffentlichungstag der Anmeldung: 05.01.2000
(73) Patentinhaber: Photonic Optische Geräte Gesellschaft m.b.H. & Co. KG, 1160 Wien (AT)
(72) Erfinder: Zehetner, Helmut, 2201 Gerasdorf (AT)
(74) Vertreter: Révy von Belvárd, Peter

(56) Entgegenhaltungen:
- EP-A- 0 458 096
- DE-A- 1 622 989
- DE-U- 29 621 092
- US-A- 4 729 070

## Beschreibung

Die Erfindung betrifft ein Ringlicht nach dem Oberbegriff des Anspruches 1, sowie eine Vorsatzoptik hierfür mit dem Oberbegriffsmerkmalen des Anspruches 5.

Ringlichter werden beispielsweise zur Auflichtbeleuchtung von Objekten bei der Mikroskopie verwendet. Hiebei wird das Licht einer Kaltlichtleuchte über einen Lichtleiter, der aus einer Vielzahl von Einzelfasem gebildet sein kann, in das Ringlicht geführt, das um das Objektiv des Mikroskops angeordnet ist. Im Falle einer Faseroptik sind die Fasern des Lichtleiters durch einen konzentrischen ringförmigen Spalt geführt und gleichmäßig über die Fläche dieses Spalts verteilt. Im Zuge der Herstellung bzw. vor Bearbeitung dieses Faseraustritts treten die Fasern des Lichtleiters geneigt zur Rotationsachse des Ringlichts bzw. des Objektivs des Mikroskops durch den ringförmigen Spalt aus und werden parallel zur Ebene des Spaltes geschliffen. Beispiele für solche Ringlichter finden sich in der EP-A-0 458 096, in der US-A-4,729,070, der DE-A-16 22 989 oder der DE-U-29621092.

Durch diese herstellungsbedingte geometrische Konfiguration, die natürlich auch für jeden anderen Lichtleiter zutreffen kann, ist der Lichtaustrittskegel asymmetrisch zur Symmetrie- bzw. Rotationsachse des Ringlichts und das Objektfeld ist ab einem minimalen Arbeitsabstand von 20 mm homogen ausgeleuchtet.

Bei größeren Arbeitsabständen bis ca. 300 mm verlassen immer mehr Strahlen des austretenden Lichtskegels den achsnahen Bereich und dienen daher nicht der Objektbeleuchtung. Dies ist von großem Nachteil, da die Beleuchtung mit zunehmendem Arbeitsabstand stark abnimmt.

Es wurde bereits vorgeschlagen, diesen Nachteil dadurch zu vermeiden, daß Fasergruppen im Ringlicht zur Symmetrieachse schwenkbar bzw. verstellbar angeordnet sind, um eine Fokussierung am Objekt bei größeren Objektabständen vornehmen zu können. Dieser bekannte Vorschlag ist jedoch eine aufwendige mechanische Konstruktion und erbringt darüberhinaus nicht den Effekt der erforderlichen homogenen Helligkeitsverteilung, da die Anzahl der am Umfang des Ringlichts angeordneten Fasergruppen beschränkt ist.

Der Erfindung liegt daher die Aufgabe zugrunde, ein Ringlicht der eingangs genannten Art so auszubilden, daß es die Nachteile der bekannten Ringlichter vermeidet und eine Fokussierung des Lichts am Objekt insbesondere bei variablen Arbeitsabständen in einfacher Weise mit höchstmöglicher Beleuchtungsstärke, aber auch mit Anpassung an die Objektgröße ermöglicht und hiebei den dunklen Fleck im Bereich der Symmetrieachse des Systems vermeidet. Dies gelingt erfindungsgemäß durch die kennzeichnenden Merkmale des Anspruches 1.

Durch diese Ausbildung wird in vorteilhafter Weise erreicht, daß auch bei größeren Arbeitsabständen die zur Symmetrie- bzw. Rotationsachse geneigten Lichtstrahlen auf das Objekt derart projiziert werden, daß größtmögliche homogene Beleuchtungsstärke gegeben ist. Zur Fokussierung bei unterschiedlichen Arbeitsabständen, aber auch zur Anpassung der beleuchteten Fläche an das Objekt, kann in vorteilhafter Weise der Abstand des optischen Elements zur Lichtaustrittsfläche des Ringlichts oder der Lichtleiterfasern über den verschiebbaren und/oder verdrehbaren Fassungsring in einfacher Weise eingestellt werden.

Die Erfindung bezieht sich aber auch auf eine Vorsatzoptik, die bei einem solchen Ringlicht zur Anwendung kommt und die Merkmale des Anspruches 5 aufweist.

Zur einfachen und kostengünstigen Herstellung wird nach einem weiteren Kennzeichen der Erfindung vorgeschlagen, das optische Element aus Kunststoff zu fertigen und vorzugsweise einstückig mit dem Fassungsring auszubilden. Hierdurch ist die Vorsatzoptik kostengünstig herstellbar und der Montageaufwand gering.

Die Erfindung ist in den Zeichnungen in einer Ausführungsform schematisch beispielsweise dargestellt. Hiebei zeigen
- Fig. 1: ein Ringlicht mit optischem Element,
- Fig. 2a:: den Lichtstrahlenverlauf am Faseraustritt,
- Fig. 2b:: die Lichtstrahlengeometrie ohne optischem Element
- Fig. 3a:: den Lichtstrahlenaustritt am optischen Element, anliegend an den Lichtaustrittflächen der Fasern,
- Fig. 3b:: die Lichtstrahlengeometrie mit optischem Element, anliegend an den Lichtaustrittsflächen der Fasern,
- Fig. 4a:: den Lichtstrahlenaustritt am optischen Element, angeordnet im Abstand zu den Lichtaustrittsflächen der Fasern,
- Fig. 4b:: die Lichtstrahlengeometrie mit optischem Element, angeordnet im Abstand zu den Lichtaustrittsflächen der Fasern, und
- Fig. 5: ein Diagramm Lichtstrom/Arbeitsabstand.

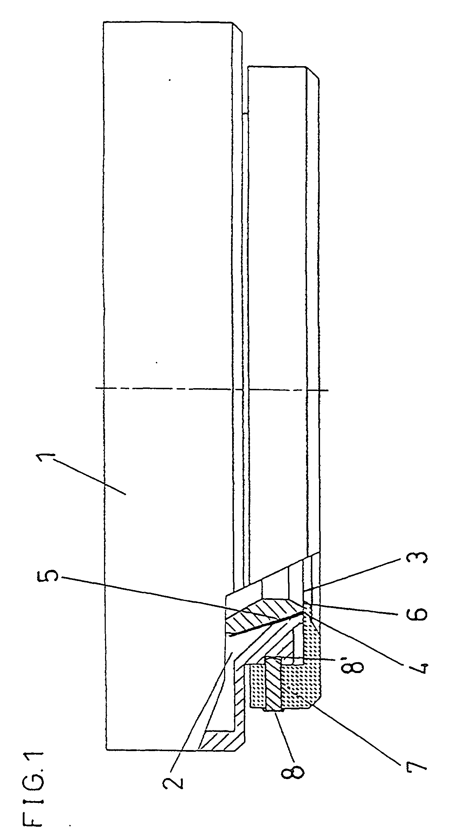

In Fig. 1 ist mit 1 ein Ringlicht bezeichnet, das um das Objektiv eines nicht dargestellten Mikroskops angeordnet ist und zur Beleuchtung des zu untersuchenden Objekts dient. Das Ringlicht 1 ist schematisch dargestellt, wobei in der Zeichnung links das Ringlicht 1 teilweise geschnitten und rechts das Ringlicht in Ansicht dargestellt ist.

Über einen Faser- oder einen anderen Lichtleiter wird das Licht, beispielsweise einer Kaltlichtleuchte, in den Hohlraum 2 des Ringlichts 1 geführt. An der zum Objekt weisenden unteren Ringfläche 3 ist ein ringförmiger Spalt 4 vorgesehen, in den die über die gesamte ringförmige Fläche 3 des Spalts gleichmäßig verteilten Fasern 5 des Lichtleiters ragen. Die Austrittsfläche aller Fasern 5 ist in der Ebene der Ringfläche 3 plan geschliffen und poliert.

Der Spalt 4 hat zum Beispiel einen mittleren Durchmesser von 56 mm und eine konstante Breite im Bereich von 0,5 bis 0,75 mm. Die numerische Apertur der aus Glas gefertigten Fasern ist 0,57mm.

Dem Spalt 4 bzw. den Fasern 5 liegt das optische Element 6 gegenüber, das als ringförmige konvexe Kunststofflinse ausgebildet ist. Dieses optische Element 6 ist einstückig in dem Fassungsring 7 ausgebildet. Das optische Element 6 und der Fassungsring 7 bilden eine bauliche Einheit, die an der Außenwand des Ringlichts 1 drehbar gelagert ist, wobei der Führungsstift 8 in die schraubenförmig ausgebildete Führungsnut 8' eingreift. In nicht dargestellter Weise sind drei Führungsstifte 8 gleichmäßig verteilt über den Umfang des Fassungsringes 7 angeordnet. Eine Verdrehung des optischen Elements 6 führt somit zu einer Veränderung des Abstandes des optischen Elements 6 zur Lichtaustrittsfläche der Fasern 5. Das ringförmig ausgebildete optische Element 6 ist koaxial zur Symmetrieachse des nicht dargestellten Objektives des Mikroskops angeordnet.

Aus Fig. 2a ist ausschnittsweise ersichtlich, daß durch Bearbeitung der jeweiligen Austrittsfläche 9 unter dem Winkel α der Lichtaustrittskegel (Öffnungswinkel γ ) asymmetrisch zur Symmetrieachse 10 des Ringlichts ist. Die Austrittsfläche 9 ist orthogonal zur Symmetrieachse 10 vorgesehen.

Die Lichtstrahlen treten mit unterschiedlichem Winkel β aus, wobei mit 11 die inneren zur Symmetrieachse 10 gerichteten Randstrahlen, mit 12 mittlere Strahlen und mit 13 die äußeren nahezu parallel zur Symmetrieachse 10 verlaufenden Randstrahlen bezeichnet sind.

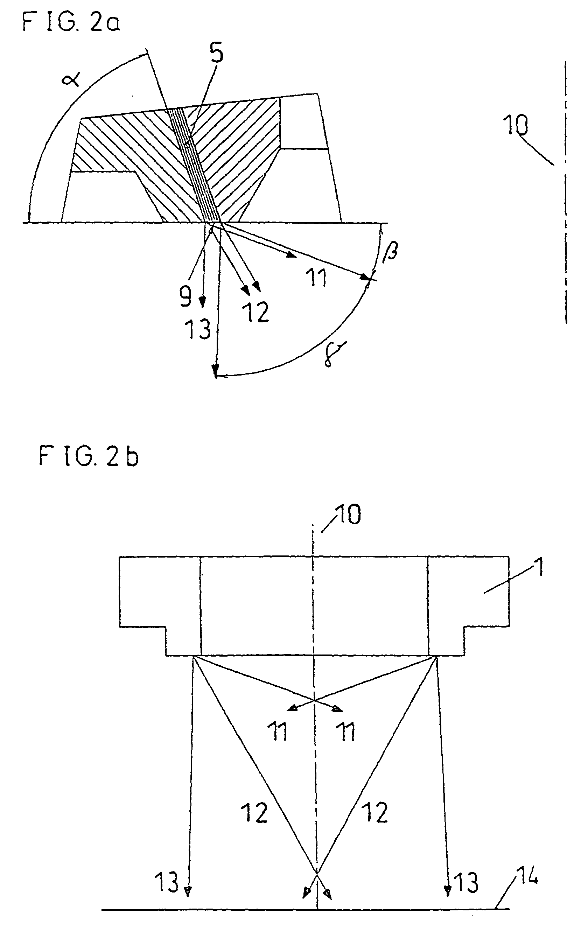

Fig. 2 b zeigt den geometrischen Verlauf dieser Lichtstrahlen 11, 12, 13 zum zu beleuchtenden Objekt 14, wobei ersichtlich ist, daß bei dem dargestellten Arbeitsabstand Objekt 14 - Ringlicht 1 die inneren Randstrahlen 11 das Objekt nicht beleuchten und somit ein deutlicher Helligkeitsverlust eintritt.

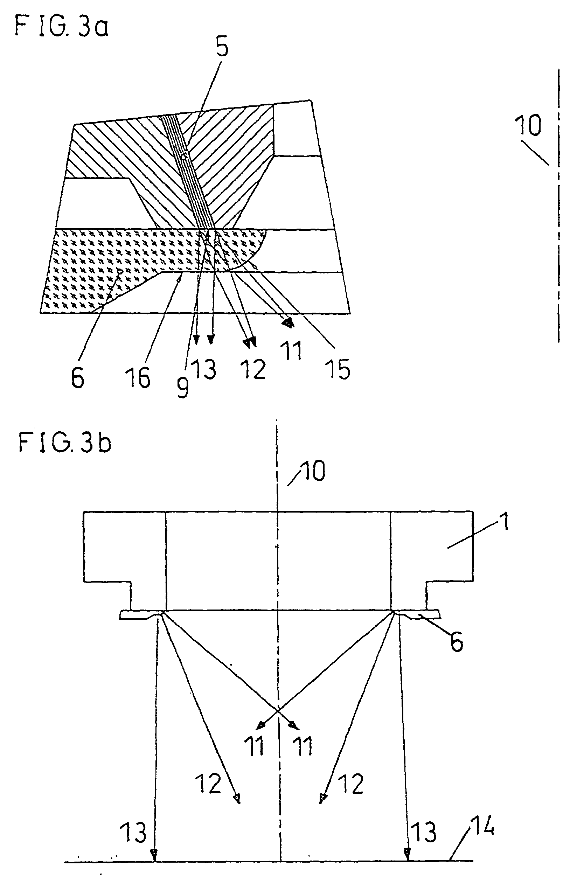

Mit der Verwendung der Vorsatzoptik bzw. des optischen Elements 6 nach Fig. 3a wird eine Erhöhung der Beleuchtungsintensität am Objekt 14 erreicht. Das ausschnittsweise dargestellte optische Element 6 ist als ringförmige Linse ausgebildet und zwar mit einer derartigen Geometrie, daß die mit unterschiedlichem Winkel β (gemäß Fig. 2a) austretenden Lichtstrahlen optisch deutlich unterschiedlich wirksame Zonen 15 durchlaufen. Hiezu ist die ringförmige Linse als konvexe rotationssymmetrische Linse ausgebildet, die für die zur Symmetrieachse geneigten Lichtstrahlen 11,12 wirksam ist. Je kleiner der Austrittswinkel β (gemäß Fig. 2a) der geneigten Lichtstrahlen ist, umso stärker ist die Ablenkung der Lichtstrahlen 11,12 in Richtung größerer Entfernung des zu beleuchtenden Objekts, was zur deutlichen Erhöhung der Lichtintensität am Objekt führt, wie in Fig. 3b gezeigt ist.

Im Bereich der Lichtstrahlen 13, die nahezu parallel zur Symmetrieachse 10 verlaufen, ist das optische Element 6 als planparallele Platte 16 ausgebildet.

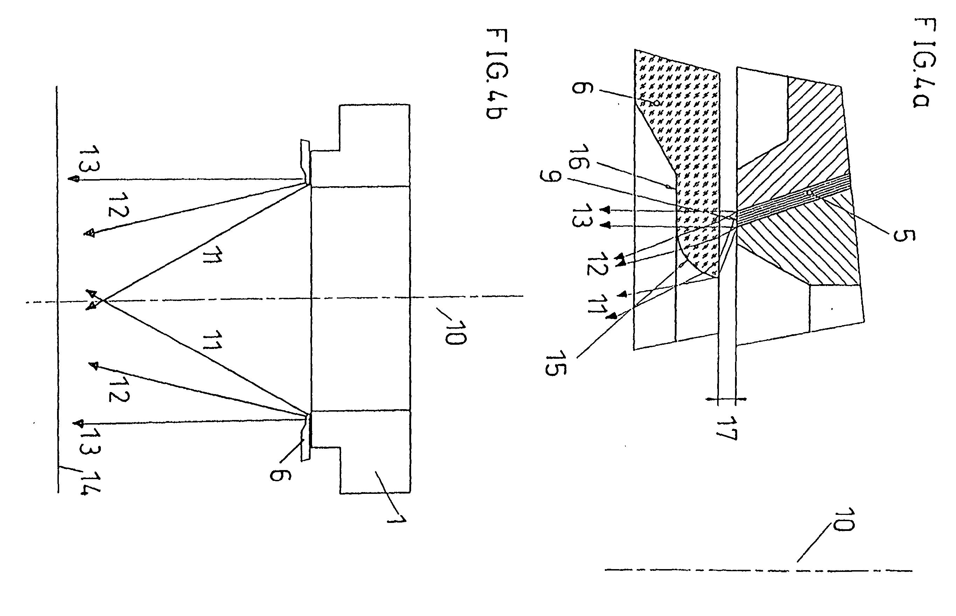

Positioniert man das optische Element 6, wie anhand der Fig. 1 beschrieben, in einem Abstand 17 gemäß Fig. 4a zur Lichtaustrittsfläche 9, so wird die Neigung der projizierten Lichtstrahlen 11, 12 zur Symmetrieachse derart verändert, daß eine Ablenkung in Richtung noch größerer Objektentfemung erzielt wird, wie in Fig. 4b veranschaulicht ist. Die Vergrößerung des Abstandes 17 bewirkt, daß für unter kleinem Winkel β (gem. Fig. 2a) austretende Strahlen große Brechkraft der Zone 15 wirksam ist.

Durch Variation des Abstandes 17 kann die Fokussierung der Lichtstrahlen, die Größe der beleuchteten Fläche und die Homogenität der beleuchteten Fläche eingestellt werden. Dies ist auch bei unterschiedlichen Arbeitsabständen möglich.

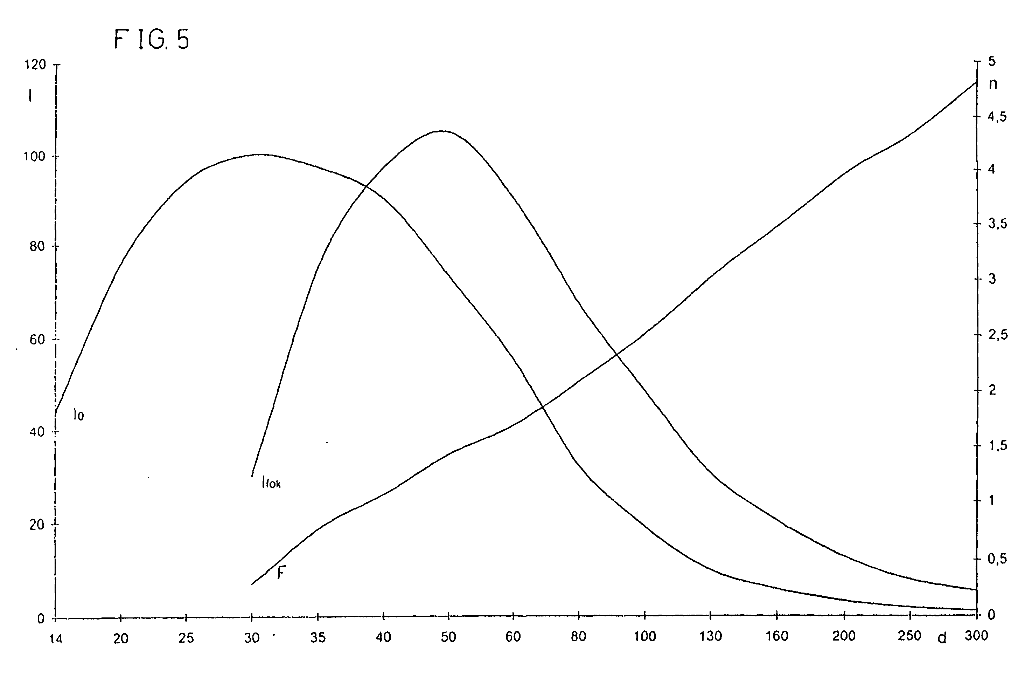

Das Diagramm nach Fig. 5 zeigt den Gewinn an Beleuchtungsstärke durch die erfindungsgemäße Ausbildung der Vorsatzoptik für das Ringlicht. An der Abszisse ist der Arbeitsabstand d von Ringlicht und Objekt, 20 bis 300 mm, an der Ordinate links der Lichtstrom I eingetragen. Die Kurve Io veranschaulicht die Beleuchtungsstärke ohne Verwendung der Vorsatzoptik, die Kurve I_{fok} veranschaulicht die Beleuchtungsstärke mit Vorsatzoptik und durchgeführter Fokussierung bei unterschiedlichen Arbeitsabständen.

An der Ordinate rechts ist der Faktor n der Erhöhung der Beleuchtungsstärke durch Verwendung der erfindungsgemäßen Vorsatzoptik eingetragen. Die zugehörige Kurve ist mit F bezeichnet.

Es wird darauf hingewiesen, daß die Zone 15 auch aus mehreren konzentrische zueinander angeordneten Zonen gebildet sein kann, die zueinander unterschiedliche Brechkraft aufweisen.

Die Flächen können sphärisch oder asphärisch ausgebildet sein. Das optische Element ist vorteilhaft im Spritzgußverfahren aus Kunststoff gefertigt.

Die Erfindung ist nicht auf die Verwendung zur Beleuchtung von Objekten bei der Mikroskopie beschränkt. Die erfindungsgemäße Vorsatzoptik kann auch für die Auflichtbeleuchtung bei Profilprojektoren, für Beleuchtung bei der Fotografie, Operationsfeldbeleuchtung in der Heilkunde und Arbeitsplatzbeleuchtung für Präzisionsarbeiten und dgl. vorteilhaft eingesetzt werden.

## Patentansprüche

1. Ringlicht mit einer Vorsatzoptik zur Lichtintensitätsverteilung auf einem zu beleuchtenden Objekt mittels zur Symmetrieachse geneigter Lichtstrahlen, vorzugsweise über eine Faseroptik, mit einem konzentrisch zum Ringlicht an der Lichtaustrittsseite desselben bzw. der Lichtleiterfasern angeordneten ringförmigen optischen lichtdurchlässigen Element, das eine rotationssymmetrische Zone mit für aus dem Ringlicht bzw. den Lichtleiterfasern in Richtung zur Rotationsachse hinaustretende Lichtstrahlen zunehmender Brechkraft aufweist, **dadurch gekennzeichnet, daß** das optische Element (6) benachbart und konzentrisch zur Zone (15) mit in radialer Richtung zunehmender Brechkraft eine für aus dem Ringlicht oder den Lichtleiterfasern (5) in nahezu paralleler Richtung zur Rotationsachse (10) austretenden Lichtstrahlen (13) brechkraftlose Zone (16) ausweist, und daß Mittel zum Fokussieren der Vorsatzoptik vorgesehen sind.

2. Ringlicht nach Anspruch 1, wobei die Mittel zum Fokussieren einen verschiebbaren und/oder verdrehbaren Fassungsring (7) zum Einstellen des Abstandes (17) des optischen Elements (6) zur Lichtaustrittsfläche (9) des Ringlichts bzw. der Lichtleiterfasern (5) aufweisen.

3. Ringlicht nach Anspruch 1 oder 2, wobei die Lichtleitfasern (5) der Faseroptik zum Erzeugen der zur Symmetrieachse geneigten Lichtstrahlen zur Symmetrieachse geneigt sind.

4. Ringlicht nach einem der vorhergehenden Ansprüche, wobei das optische Element (6) aus Kunststoff gefertigt ist und vorzugsweise einstückig mit seinem Fassungsring (7) ausgebildet ist.

5. Vorsatzoptik für ein Ringlicht nach einem der vorhergehenden Ansprüche, mit einem ringförmigen, optischen, lichtdurchlässigen Element, das eine rotationssymmetrische Zone mit in Richtung zur Rotationsachse hinaustretende Lichtstrahlen zunehmender Brechkraft aufweist, wobei das optische Element (6) benachbart und konzentrisch zur Zone (15) mit in radialer Richtung zunehmender Brechkraft eine brechkraftlose Zone (16) ausweist, und daß vorzugsweise dieser Vorsatzoptik ein verschiebbarer und/oder verdrehbarer Fassungsring (7) zugeordnet ist.

6. Vorsatzoptik für ein Ringlicht nach Anspruch 1, wobei das optische Element (6) aus Kunststoff gefertigt ist und vorzugsweise einstückig mit dem Fassungsring (7) ausgebildet ist.

## Claims

1. Ring light with auxiliary optics for distributing the intensity of the light striking an object to be illuminated by means of light beams inclined relative to the axis of symmetry, preferably by means of a fibre-optic system, comprising a ring-shaped, translucent optical element which is arranged concentrically with the ring light on the exit side thereof or of the optical fibres and comprises a rotationally symmetrical zone with increasing refractive power for light beams emerging from the ring light or from the optical fibres in the direction of the axis of rotation, **characterised in that** the optical element (6) comprises a zone (16) with no refractive power for light beams (13) emerging from the ring light or from the optical fibres (5) in a direction almost parallel to the axis of rotation (10) adjacent to and concentric with the zone (15) with retractive power increasing in the radial direction and that means are provided for focusing the auxiliary optics.

2. Ring light according to claim 1, in which the focusing means comprise a displaceable and/or rotatable mounting ring (7) for adjusting the distance (17) of the optical element (6) from the exit face (9) of the ring light or of the optical fibres (5).

3. Ring light according to claim 1 or claim 2, in which the optical fibres (5) of the fibre-optic system for generating the light beams inclined relative to the axis of symmetry are inclined relative to the axis of symmetry.

4. Ring light according to one of the preceding claims, in which the optical element (6) is made of plastic and is preferably formed in one piece with its mounting ring (7).

5. Auxiliary optics for a ring light according to one of the preceding claims, comprising a ring-shaped, translucent optical element comprising a rotationally symmetrical zone with increasing refractive power for light beams emerging in the direction of the axis of rotation, in which the optical element (6) comprises a zone (16) with no refractive power adjacent to and concentric with the zone (15) with refractive power increasing in the radial direction and in which a displaceable and/or rotatable mounting ring (7) is preferably associated with these auxiliary optics.

6. Auxiliary optics for a ring light according to claim 1, in which the optical element (6) is made of plastic and is preferably formed in one piece with the mounting ring (7).

## Revendications

1. Luminaire annulaire, présentant un adaptateur optique pour la répartition de l'intensité lumineuse sur un objet, à illuminer à l'aide de rayons lumineux inclinés par rapport à l'axe de symétrie, de préférence par l'intermédiaire à fibres, avec un élément optique transparent à la lumière, à forme annulaire, disposé concentriquement par rapport au luminaire annulaire sur le côté de sortie de la lumière de celui-ci ou des fibres conduisant la lumière, élément présentant une zone répondant à une symétrie de rotation, avec un pouvoir convergeant ou puissance allant en augmentant pour des rayons lumineux sortant du luminaire annulaire, respectivement sortant des fibres de guidage de lumière en allant dans la direction de l'axe de rotation, **caractérisé en ce que** l'élément optique (6) présente, au voisinage et concentriquement par rapport à la zone (15), ayant un pouvoir convergeant allant en augmentant en direction radiale, une zone (16) sans pouvoir convergeant pour des rayons lumineux (13), sortant du luminaire annulaire ou des fibres de guidage de lumière (5), dans une direction à peu près parallèle à l'axe de rotation (10), et **en ce que** des moyens sont prévus pour focaliser l'adaptateur optique.

2. Luminaire annulaire selon la revendication 1, les moyens de focalisation présentant une bague de monture (7), susceptible de coulisser et/ou susceptible de tourner, afin d'effectuer le réglage de l'espacement (17) de l'élément optique (6) par rapport à la surface de sortie de lumière (9) du luminaire annulaire, respectivement des fibres de guidage de lumière (5).

3. Luminaire annulaire selon la revendication 1 ou 2, les fibres de guidage de lumière (5) de la fibre optique étant inclinées par rapport à l'axe de rotation, pour produire les rayons lumineux inclinés par rapport à l'axe de symétrie.

4. Luminaire annulaire selon l'une des revendications précédentes, l'élément optique (6) étant fabriqué en matière synthétique et, de préférence, étant réalisé d'une seule pièce avec sa bague de monture (7).

5. Adaptateur optique pour un luminaire annulaire selon l'une des revendications précédentes, avec un élément optique transparent à la lumière, à forme annulaire, présentant une zone répondant à une symétrie de rotation, avec un pouvoir convergeant allant en augmentant pour des rayons lumineux sortant en allant dans la direction de l'axe de rotation, l'élément optique (6) présentant, au voisinage et concentriquement par rapport à la zone (15), ayant un pouvoir convergeant allant en augmentant en direction radiale, une zone (16) sans pouvoir convergeant, et en ce que, de préférence, une bague de monture (7), susceptible de coulisser et/ou susceptible de tourner, est associée à cet adaptateur optique.

6. Adaptateur optique pour un luminaire annulaire selon la revendication 1, l'élément optique (6) étant fabriqué en matière synthétique et, de préférence, étant réalisé d'une seule pièce avec sa bague de monture (7).
